# EUROPEAN PATENT SPECIFICATION

(11) **EP 4 052 817 B1**
(45) Date of publication and mention of the grant of the patent: **19.06.2024**
(21) Application number: 20881782.5
(22) Date of filing: 16.01.2020
(51) Int. Cl.: B22C 7/02, B22C 9/04, B22D 18/06, B22D 25/00, B22D 25/02, B33Y 10/00, B33Y 80/00

(54) **HIGH MELTING POINT KELVIN STRUCTURE LATTICE METAL, PREPARATION METHOD AND APPLICATION THEREOF**
HOCH SCHMELZPUNKT KELVIN STRUKTUR GITTER METALL, HERSTELLUNGSVERFAHREN UND SEINE ANWENDUNG
MÉTAL EN TREILLIS À STRUCTURE DE KELVIN À POINT DE FUSION ÉLEVÉ, SON PROCÉDÉ DE PRÉPARATION ET SON APPLICATION

(30) Priority: 29.10.2019 CN 201911034471
(43) Date of publication of application: 07.09.2022
(73) Proprietor: Shenyang Research Institute of Foundry Co., Ltd., Liaoning 110022 (CN)
(72) Inventor: LOU, Yanchun, Shenyang, Liaoning 110022 (CN); YU, Bo, Shenyang, Liaoning 110022 (CN); WEI, Yanpeng, Shenyang, Liaoning 110022 (CN); YANG, Quanzhan, Shenyang, Liaoning 110022 (CN); SHI, Jian, Shenyang, Liaoning 110022 (CN); SHUI, Guoyan, Shenyang, Liaoning 110022 (CN); GAO, Peng, Shenyang, Liaoning 110022 (CN); CHENG, Jingchang, Shenyang, Liaoning 110022 (CN); MIAO, Zhiquan, Shenyang, Liaoning 110022 (CN)
(74) Representative: De Clercq & Partners
(86) International application number: PCT/CN2020/000022
(87) International publication number: WO 2021/082277

(56) References cited:
- EP-A1- 2 420 316
- EP-A2- 1 800 700
- CN-A- 104 646 669
- CN-A- 104 646 669
- CN-A- 105 033 188
- CN-A- 105 033 188
- CN-A- 108 330 313
- CN-A- 109 022 882
- CN-A- 109 632 603
- CN-A- 109 632 603
- CN-A- 110 042 267
- CN-A- 110 042 267
- JP-A- H1 083 819
- VLASTA BEDNÁØOVÁ ET AL: "Cast cellular metals with regular and irregular structures", MATERIALI IN TECHNOLOGIJE/ MATERIALS AND TECHNOLOGY 48, vol. 48, no. 2, 1 January 2014 (2014-01-01), pages 175-179, XP055398925,
- NIU JIE ET AL: "Numerical study on load-bearing capabilities of beam-like lattice structures with three different unit cells", INTERNATIONAL JOURNAL OF MECHANICS AND MATERIALS IN DESIGN, SPRINGER NETHERLANDS, DORDRECHT, vol. 14, no. 3, 26 July 2017 (2017-07-26), pages 443-460, XP036566426, ISSN: 1569-1713, DOI: 10.1007/S10999-017-9384-3 [retrieved on 2017-07-26]
- ZHAO LONGZHI ET AL: "Finite element analysis of the open-cell nickel foam based on the Kelvin model", MECHANIC AUTOMATION AND CONTROL ENGINEERING (MACE), 2010 INTERNATIONAL CONFERENCE ON, IEEE, PISCATAWAY, NJ, USA, 26 June 2010 (2010-06-26), pages 81-84, XP031723261, ISBN: 978-1-4244-7737-1
- YAN CHUNZE ET AL: "Advanced lightweight 316L stainless steel cellular lattice structures fabricated via selective laser melting", MATERIALS AND DESIGN, vol. 55, 1 March 2014 (2014-03-01), pages 533-541, XP093032674, GB ISSN: 0261-3069, DOI: 10.1016/j.matdes.2013.10.027
- CHUNG JACOB ET AL: "Evaluation of Open Cell Foam Heat Transfer Enhancement for Liquid Rocket Engines", 42ND AIAA/ASME/SAE/ASEE JOINT PROPULSION CONFERENCE & EXHIBIT, 9 July 2006 (2006-07-09), XP093032680, Reston, Virigina DOI: 10.2514/6.2006-5050

## Description

### BACKGROUND OF THE PRESENT INVENTION

### FIELD OF INVENTION

The invention relates to a high melting point Kelvin structure lattice metal, preparing method an application thereof.

### DESCRIPTION OF RELATED ARTS

Lattice metal, as a kind of porous metal, is named for its periodic ordered structure and similar to crystal lattice configuration. In 2001, inspired by the study of mechanical behavior and deformation mode of porous foam metal, Professor Evans from California University, Professor Ashby from University of Cambridge, Professor Gibson from Massachusetts Institute of Technology and Professor Hutchinson from Harvard University, etc., put forward the concept of light lattice structure. Lattice metal has the structural characteristics of light weight, high specific strength, high specific rigidity and the functional characteristics of vibration reduction, noise reduction and buffer energy absorption, etc. Therefore, lattice metal has been widely concerned by international academic circles and is considered to be one of the most promising new generation lightweight materials. Among them, the lattice metal having a matrix made of high melting point metal represented by steel materials and superalloys has better comprehensive properties in strength and temperature resistance, which can greatly broaden the scope and depth of the engineering application of lattice metal.

In the research of lattice metal, the first problem is to choose the unit cells of lattice metal. People have proposed various representative topological configurations. Among them, tetrahedron, pyramid, kagome and other unit cells are the most widely used of the lattice unit cells. However, lattice metals designed with the above-mentioned unit cells are generally anisotropic, and the application conditions are limited and the applicability is obviously insufficient. It is an important research direction to find a lattice structure which tends to be isotropic. Lord Kelvin proposed an ideal porous structure with Plateau hypothesis: porous structure should be a polyhedron three-dimensional structure composed of 14 faces, including 8 hexagons and 6 tetragons, and has high symmetry. The tetrakaidekahedron structure proposed by Lord Kelvin is named Kelvin structure. The theoretical calculation and numerical simulation results show that Kelvin structure has excellent mechanical isotropy compared with other structures, and is an ideal unit cell for constructing lattice metal. However, due to the complex spatial topology of Kelvin structure, the lattice metal using Kelvin structure as its unit cell and its preparing methods have not been reported.

The preparing methods of lattice metal mainly include: investment casting method, deformation forming method and metal wire approaches method. Among them, deformation forming method and metal wire approaches method have higher demand for the ductility of the matrix materials, and the range of options is narrow, and the pore structures of lattice metal are limited. The investment casting method uses the polymer material as the preform material of lattice material, by coating refractory ceramic slurry and sintering at high temperature to decompose the polymer, so as to obtain the lattice material ceramic preform. The molten metal is poured into the mold by combining the investment casting technology, and after solidification, the ceramic preform is removed to obtain the lattice metal. The cellular size of lattice metal prepared by the investment casting method can be as small as a few millimeters. The main advantage of this method is that the pore structure is adaptable to manufacture and can meet the design requirements of complex lattice structure. At the same time, the investment casting method can obtain the lattice metal with high porosity, and meet the practical demand of lightweight to the maximum extent. The investment casting method has become one of the best process methods for manufacturing the lattice metal. However, the lattice metal prepared by the investment casting method is mainly made of aluminum alloy with low melting point at present, and its plaster and other preform materials cannot meet the process requirements of metal with high melting point. On the other hand, the metal matrix and the ceramic network are interpenetrating in the preparation process of complex pore structures, such as Kelvin structure, and if the preform is made of the traditional shell material, such as corundum or zirconia, it will be difficult to remove. It is obvious that the key of preparing high melting point Kelvin structure lattice metal is to find a kind of ceramic preform material with high temperature strength and easy to remove.

The above analysis shows that the traditional lattice metal is limited in application condition due to the anisotropic characteristic of its unit cells. At the same time, the strength and temperature resistance of the low melting point matrix lattice metal are insufficient, and the high temperature strength and removal of the preform materials used for the preparation of the lattice metal cannot meet the technological requirements of the preparation of the high melting point matrix lattice metal, which greatly limit its application and popularization.

CN 105033 188 A discloses an aluminum-based lattice material based on 3D printing technology. In the lattice material, industrial pure aluminum or any aluminum alloy is employed as a base body. Unit cell configuration and a periodic structure thereof are modeled and designed with CATIA software and the model is produced from high-molecular materials through the 3D printing technology. An investment casting shell mold is prepared from soluble gypsum and the aluminum-based lattice material is prepared through an air-pressure seepage process. The aluminum-based lattice material can be in a pyramid type, a Kagome type and a grating type in the unit cell configuration. The invention also provides a sandwiched plate composite structure composed of the lattice material and a compact surface plate. The diameter of a unit cell bar is 0.5-5.0 mm, the length of the unit cell bar is 0.5-15.0 mm, and an included angle between the unit cell bar and a protective surface is 30-70 degrees. The compact surface plate is made from industrial pure aluminum, aluminum alloy, iron alloy or high-molecular materials. The lattice material with the industrial pure aluminum as the base body can reach higher than 5 MPa/g·cm⁻³ in specific compressive strength.

"Cast cellular metals with regular and irregular structures" (VLASTRA BEDNÁŘOVÁ ET AL, MATERIALI IN TECHNOLOGIJE / MATERIALS AND TECHNOLOGY 48, vol. 48, no. 2, 1 January 2014) discloses a way to reduce the weight of manufactured parts without adversely affecting their strength is to use porous metallic materials with different internal arrangements of the intentionally created cavities. Porous metallic materials can be made from liquid metal, from powdered metal, metal vapors, or from metal ions.

CN 109 632 603 A discloses a system for calculating the specific surface area of foam metal, a pore diameter d and porosity theta of tested foam metal are obtained and then the pore diameter d and the porosity theta are substituted into a specific surface area calculation model of the tetradecahedral model; and calculation is carried out to obtain a specific surface area of the tested foam metal.

CN 110 042 267 A discloses a preparation method of a lattice structure nickel-based sponge material. The method comprises the steps that firstly, a lattice structure plastic precursor is prepared through a 3D printing method; secondly, roughening treatment is conducted on the lattice structure plastic precursor; thirdly, nickel-based alloy powder and an additive are made into slurry; fourthly, the roughened lattice structure plastic precursor is placed in the slurry and immersed, and then a nickel-based sponge material blank is obtained centrifugally; and fifthly, the nickel-based sponge material blank is sintered, and the nickel-based sponge material is obtained.

EP 1 800 700 A2 discloses a method of forming an implant having a porous tissue ingrowth structure and a bearing support structure. The method includes depositing a first layer of a metal powder onto a substrate, scanning a laser beam over the powder so as to sinter the metal powder at predetermined locations, depositing at least one layer of the metal powder onto the first layer and repeating the scanning of the laser beam.

"Numerical study on load-bearing capabilities of beam-like lattice structures with three different unit cells" (NIU JIE ET AL, INTERNATIONAL JOURNAL OF MECHANICS ANO MATERIALS IN DESIGN, SPRINGER NETHERLANDS, DORDRECHT, vol. 14, no. 3, 26 July 2017) discloses a design and analysis of lattice structures manufactured using additive manufacturing technique is a new approach to create lightweight high-strength components. However, it is difficult for engineers to choose the proper unit cell for a certain function structure and loading case. In this paper, three beam-like lattice structures with triangular prism, square prism and hexagonal prism were designed, manufactured by SLM process using AlSi10Mg and tested.

"Finite element analysis of the open-cell nickel foam based on the Kelvin model" (ZHAO LONGZHI ET AL, MECHANIC AUTOMATION AND CONTROL ENGINEERING (MACE), 2010 INTERNATIONAL CONFERENCE ON IEEE PISCATAWAY NJ USA, 26 June 2010) discloses a nickel foam is mainly used for the battery electrode materials specifically for MH-Ni batteries, which can be widely used in the portable computers, the mobile phones and the hybrid electric vehicle. It is important to study the mechanical properties. The effects of the porosity and model type of the open cell nickel foam on the tensile behavior were investigated. With the finite element method based on Kelvin model in this paper. The results show that the Kelvin model is more resistant to deformation than the Gibson-Ashby model and is closer to the experiment results, and the bearing capacity decreasing as the porosity increasing.

"Advanced lightweight 316L stainless steel cellular lattice structures fabricated via selective laser melting" (YAN CHUNZE ET AL, MATERIALS AND DESIGN vol. 55, 1 March 2014) discloses a cell type called gyroid is designed to construct periodic lattice structures and utilize its curved cell surface as a self-supported feature which avoids the building of support structures and reduces material waste and production time. The gyroid cellular lattice structures with a wide range of volume fraction were made at different orientations, showing it can reduce the constraints in design for the SLM and provide flexibility in selecting optimal manufacturing parameters.

"Evaluation of Open Cell Foam Heat Transfer Enhancement for Liquid Rocket Engines" (CHUNG JACOB ET AL, 42ND AIAA/ASME/SAE/ASEE JOINT PROPULSION CONFERENCE & EXHIBIT, 9 July 2006) using a porous metallic foam is examined for its potential cooling enhancement capabilities. The goal of the paper is to increase the chamber wall cooling without creating an additional pressure drop penalty.

### SUMMARY OF THE PRESENT INVENTION

In view of the above problems, the present invention provides a high melting point Kelvin structure lattice metal and preparing method thereof. One of the purposes of the present invention is to solve the problem that the anisotropy of the unit cells employed by current lattice metals leads to the limited application conditions and insufficient adaptability. The design concept of Kelvin structure lattice metal, which tends to be more isotropic is proposed.

Another purpose of the present invention is to solve the problem that the narrow application range of lattice metal with low melting point metal matrix results from its insufficient strength and temperature resistance by developing ceramic preform materials suitable for high melting point metals and easy to remove, so as to prepare high melting point Kelvin structure lattice metal, and broaden the application scope and depth of lattice metal.

The technical scheme of the present invention is to design the casting process adaptively based on the Kelvin structure lattice metal, develop a new ceramic preform material, and employ indirect 3D printing and investment casting technology to prepare the high melting point Kelvin structure lattice metal.

The adaptive design of the casting process which is based on the Kelvin structure lattice metal is to design the tetrakaidecahedral structure into a Kelvin structure lattice metal taking a prism structure as its main body. The parametric modeling is carried out by using 3D modeling software. By adjusting the ratio of length to diameter, the design parameters range of pore structure suitable for the casting process is determined and the effective control of porosity of the high melting point Kelvin structure lattice metal is realized.

The purposes are achieved by the features of the respective independent claims 1, 2 and 5. Further embodiments are defined by the respective dependent claims 3 and 4.

The advantages and beneficial effects of the present invention are:

parametric modeling by using the three-dimensional modeling software and designing a Kelvin structure lattice metal taking prisms as its main body, and by adjusting the diameter and the ratio of length to diameter of the prisms to realize the casting process design and effective control of porosity of the high melting point Kelvin structure lattice metal. Based on combination of the indirect 3D printing technology and investment casting technology, the high melting point Kelvin structure lattice metal is prepared. The new ceramic preform material composition system and sintering process have been developed to ensure the high temperature strength and removal of ceramic preform. The high melting point Kelvin structure lattice metal has more isotropic mechanical properties, and has higher strength, rigidity and temperature resistance, which greatly expands the application space of lattice metal.

### BRIEF DESCRIPTION OF THE DRAWINGS

In order to more clearly explain the technical scheme of the embodiment of the present invention, the attached drawings needed to be used in the embodiments will be briefly introduced below. It should be understood that the following drawings only show some embodiments of the present invention, so it should not be regarded as the limitation of scope. For those of ordinary skill in the art, without creative labor, other relevant drawings may also be obtained according to these drawings.
Fig.1a shows the design model of the unit cell of the Kelvin structure lattice metal.
Fig.1b shows the 3D structure design model of the Kelvin structure lattice metal.
Fig.2 is the flow chart of the preparing process of the Kelvin structure lattice metal.
Fig.3 shows the DSC curve of the ceramic preform material of the Kelvin structure lattice metal.
Fig.4 shows the sintering system curve the ceramic preform materials for the preparing process of the Kelvin structure lattice metal.
Fig.5 shows the ceramic preform of the Kelvin structure lattice metal.
Fig.6 shows the sample of the preparing process of the Kelvin structure lattice metal.
Fig.7 shows the compression stress-strain curve of the three directions of the Kelvin structure lattice metal and taking 304 stainless steel as its matrix, wherein the figure number 101 represents a prism, and the figure number 100 represents Kelvin structure lattice metal unit cell.

### DETAILED DESCRIPTION OF THE PREFERRED EMBODIMENT

The preparing method of the present invention will be described in detail in combination with the accompanying drawings, and the examples mentioned are only used to explain the present invention, not to limit the scope of the present invention. The scope of the present invention is defined in the appended claims.

### Example 1

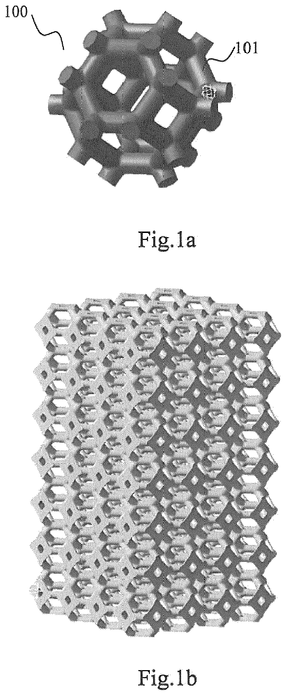

The present embodiment is to design and prepare a Kelvin structure lattice metal which has a porosity of 58% and takes 304 stainless steel as its matrix;
As shown in Fig.1a, the design model of the Kelvin structure lattice metal unit cell is described. The Kelvin structure lattice metal unit cell is adaptively designed by using 3D modeling software for casting process to design a 3D Kelvin structure lattice metal unit cell 100 taking prisms 101 as its main body, wherein the prism 101 has a diameter of 2mm and a length of 2.4mm and the ratio of length to diameter is 1.2. As shown in Fig. 1b, the 3D design model of Kelvin lattice metal is shown in Fig. 1b, and the size of the outer profile of the design model of the high melting point Kelvin structure lattice metal is 48×27×27mm, and its porosity is 58%.

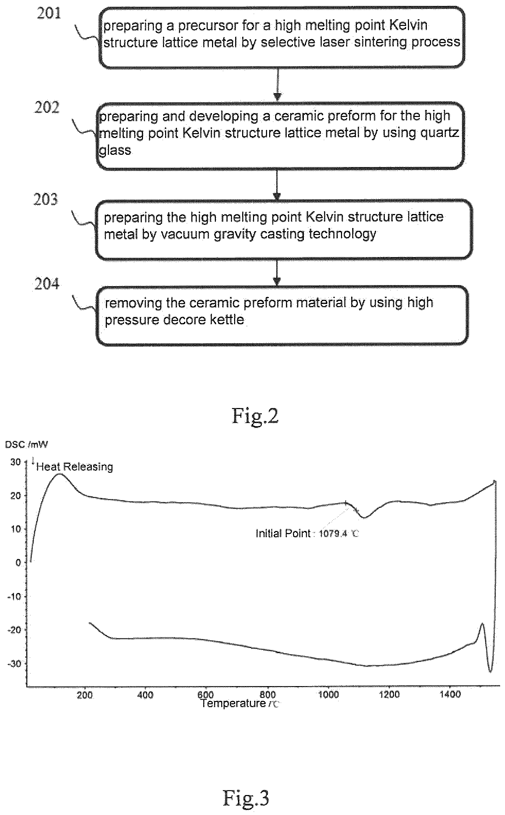

As shown in Fig.2, the flow chart of a preparing process for a high melting point Kelvin structure lattice metal is illustrated, which uses the indirect 3D printing and investment casting process to prepare the Kelvin structure lattice metal taking 304 stainless steel as its matrix, includes the following steps:
Step 201: preparing a precursor of the high melting point Kelvin structure lattice metal by selective laser sintering process, the surface roughness of the processing parameters of 3D model STL file in the selective laser sintering process is 0.05mm, at the same time, the triangle reduction is 0.04mm. The parameters of the selective laser sintering process are: the single layer thickness is 0.2mm, the scanning speed is 4000mm/s, the sintering temperature of the initial layer is 120°C, the sintering temperature of the general layer is 90°C, the material of the selective laser sintering process is polystyrene.
Step 202: preparing a ceramic preform for the high melting point Kelvin structure lattice metal by using quartz glass as its matrix, and the composition of the ceramic preform is: the ceramic skeleton is quartz glass and its mass fraction is 48%; the sintering aids are corundum sand and kaolin soil and their mass fraction are 16% and 3%, respectively; the stabilizer is silica powder and its mass fraction is 0.8%; the binder is silica sol with a mass fraction of 31.9%; the defoamer is organosilicon with a mass fraction of 0.12%; the surfactant is fatty alcohol polyoxyethylene ether, with a mass fraction of 0.15%.

The forming process of the ceramic preform material is: preparing the raw ceramic preform by the slurry coating process, drying the raw ceramic preform at room temperature for 8h after each slurry coating, and the number of the slurry coating layers is 10 until the whole preform is coated by the ceramic slurry, and after establishing a casting system and carrying out the outer slurry coating process by using the shangdian soil and shangdian sand of the traditional investment casting mold material.

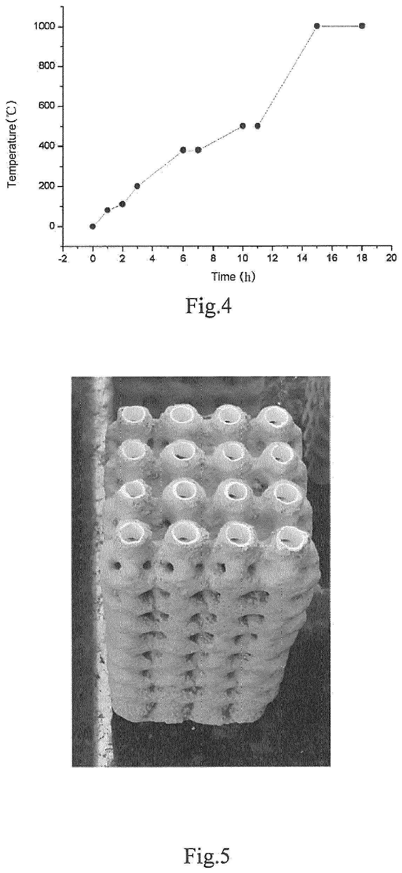

The sintering system of the ceramic preform material is: formulating the sintering system for the ceramic preform according to DSC curve of the ceramic preform material, and the DSC curve of the ceramic preform material is shown in Fig.3 and the curve of the ceramic preform is stable before 1000°C. There is no endothermic heat generation, and it can be determined that the ceramic preform material has not undergone crystal transformation. At 1079±10°C, an exothermic peak appears in the DSC curve, which can be judged to be due to the beginning of the conversion of quartz glass to α cristobalite and exothermic heat during devitrification. Therefore, the maximum sintering temperature cannot exceed 1079±10°C. The sintering system of the ceramic preform is formulated according to the DSC curve of the ceramic preform as shown in Fig.4. When the sintering temperature is less than 500°C, the heating rate is 50°C/h, and when the sintering temperature is greater than 500°C, the heating rate is 250°C/h, and the highest sintering temperature is 1000°C, and keeping warm for 4 hours. After cooling in the furnace, a ceramic preform for a Kelvin structure lattice metal with a high melting point as shown in Fig. 5 is finally obtained.

Step 203: simulating the process of filling, solidification behavior, casting thermal stress and solidification microstructure of the above-mentioned high melting point Kelvin structure lattice metal by ProCAST software to guide the implementation of the casting process, which takes the 304 stainless steel as its matrix, and preparing the high melting point Kelvin structure lattice metal by vacuum gravity casting, wherein the casting parameters are as follows: the preheating temperature of ceramic preform is 950°C, the alloy casting temperature is 1555°C, the vacuum degree is less than 200Pa.

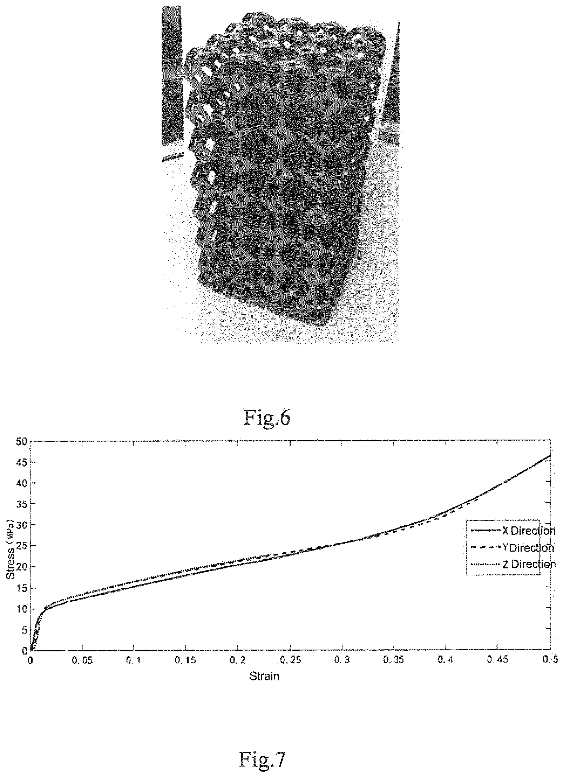

Step 204: removing the ceramic preform material of the high melting point Kelvin structure lattice metal by using high pressure decore kettle, wherein the chemical corrosion agent is potassium hydroxide, and the removing process parameters are: temperature is set to 280°C, and the pressure of the inner tank is 0.15Mpa and the high melting point Kelvin structure lattice metal as shown in Fig. 6 is finally obtained.

### Example 2

The present embodiment is to design and prepare a Kelvin structure lattice metal, which has a porosity of 82% and takes 304 stainless steel as its matrix;
The Kelvin structure lattice metal unit cell is adaptively designed by using 3D modeling software for casting process to design a 3D Kelvin structure lattice metal unit cell 100 taking prisms 101 as its main body, wherein the prism 101 has a diameter of 3mm and a length of 6mm and the ratio of length to diameter is 2. And the size of the outer profile of the design model of the high melting point Kelvin structure lattice metal is 119×68×68mm, and its porosity is 82%.

As shown in Fig.2, the flow chart of a preparing process for a high melting point Kelvin structure lattice metal is illustrated, which uses the indirect 3D printing and investment casting process to prepare the Kelvin structure lattice metal taking 304 stainless steel as its matrix, includes the following steps:
Step 201: preparing a precursor of the high melting point Kelvin structure lattice metal by selective laser sintering process, the surface roughness of the processing parameters of 3D model STL file in the selective laser sintering process is 0.04mm, at the same time, the triangle reduction is 0.03mm. The parameters of the selective laser sintering process are: the single layer thickness is 0.2mm, the scanning speed is 4000mm/s, the sintering temperature of the initial layer is 110°C, the sintering temperature of the general layer is 100°C, the material of the selective laser sintering process is polystyrene.
Step 202: preparing a ceramic preform for the high melting point Kelvin structure lattice metal by using quartz glass as its matrix, and the composition of the ceramic preform is: the ceramic skeleton is quartz glass and its mass fraction is 51%; the sintering aids are corundum sand and kaolin soil and their mass fraction are 14% and 2%, respectively; the stabilizer is silica powder and its mass fraction is 1.5%; the binder is silica sol with a mass fraction of 31.2%; the defoamer is organosilicon with a mass fraction of 0.15%; the surfactant is fatty alcohol polyoxyethylene ether, with a mass fraction of 0.18%.

The forming process of the ceramic preform material is: preparing the raw ceramic preform by the slurry coating process, drying the raw ceramic preform at room temperature for 9h after each slurry coating, and the number of the slurry coating layers is 10 until the whole preform is coated by the ceramic slurry, and then establishing a casting system and carrying out the outer slurry coating process by using the shangdian soil and shangdian sand of the traditional investment casting mold material.

The sintering system of the ceramic preform material is: formulating the sintering system for the ceramic preform according to DSC curve of the ceramic preform material, and when the sintering temperature is less than 500°C, the heating rate is 50°C/h, and when the sintering temperature is greater than 500°C, the heating rate is 250°C/h, and the highest sintering temperature is 1030°C, and keeping warm for 4 hours. After cooling in the furnace, a ceramic preform for a Kelvin structure lattice metal with a high melting point is finally obtained.

Step 203: simulating the process of filling, solidification behavior, casting thermal stress and solidification microstructure of the above-mentioned high melting point Kelvin structure lattice metal by ProCAST software to guide the implementation of the casting process, which takes the 304 stainless steel as its matrix, and preparing the high melting point Kelvin structure lattice metal by vacuum gravity casting, wherein the casting parameters are as follows: the preheating temperature of ceramic preform is 1000°C, the alloy casting temperature is 1555°C, the vacuum degree is less than 200Pa.

Step 204: removing the ceramic preform material of the high melting point Kelvin structure lattice metal by using high pressure decore kettle, wherein the chemical corrosion agent is potassium hydroxide, and the removing process parameters are: temperature is set to 300°C, and the pressure of the inner tank is 0.25Mpa and the removing time is 4h, the high melting point Kelvin structure lattice metal is finally obtained, which has a porosity of 82%. Fig.7 shows the compressive stress-strain curves of the Kelvin structure lattice metal in three spatial directions. The Kelvin structure lattice metal taking 304 stainless steel as the matrix in this example has an obvious plastic yield platform, and the platform stress is 10MPa. It has the same mechanical properties in three spatial directions.

### Example 3

The present embodiment is to design and prepare a Kelvin structure lattice metal, which has a porosity of 88% and takes 304 stainless steel as its matrix;
The Kelvin structure lattice metal unit cell is adaptively designed by using 3D modeling software for casting process to design a 3D Kelvin structure lattice metal unit cell 100 taking prisms 101 as its main body, wherein the prism 101 has a diameter of 10mm and a length of 30mm and the ratio of length to diameter is 3. And the size of the outer profile of the design model of the high melting point Kelvin structure lattice metal is 594×339×339mm, and its porosity is 92%.

As shown in Fig.2, the flow chart of a preparing process for a high melting point Kelvin structure lattice metal is illustrated, which uses the indirect 3D printing and investment casting process to prepare the Kelvin structure lattice metal taking 304 stainless steel as its matrix, includes the following steps:
Step 201: preparing a precursor of the high melting point Kelvin structure lattice metal by selective laser sintering process, the surface roughness of the processing parameters of 3D model STL file in the selective laser sintering process is 0.06mm, at the same time, the triangle reduction is 0.05mm. The parameters of the selective laser sintering process are: the single layer thickness is 0.2mm, the scanning speed is 4000mm/s, the sintering temperature of the initial layer is 110 °C, the sintering temperature of the general layer is 95°C, the material of the selective laser sintering process is polystyrene.
Step 202: preparing a ceramic preform for the high melting point Kelvin structure lattice metal by using quartz glass as its matrix, and the composition of the ceramic preform is: the ceramic skeleton is quartz glass and its mass fraction is 55%; the sintering aids are corundum sand and kaolin soil and their mass fraction are 12% and 1%, respectively; the stabilizer is silica powder and its mass fraction is 0.5%; the binder is silica sol with a mass fraction of 31.2%; the defoamer is organosilicon with a mass fraction of 0.16%; the surfactant is fatty alcohol polyoxyethylene ether, with a mass fraction of 0.16%.

The forming process of the ceramic preform material is: preparing the raw ceramic preform by the slurry coating process, drying the raw ceramic preform at room temperature for 12h after each slurry coating, and the number of the slurry coating layers is 12 until the whole preform is coated by the ceramic slurry, and then establishing a casting system and carrying out the outer slurry coating process by using the shangdian soil and shangdian sand of the traditional investment casting mold material.

The sintering system of the ceramic preform material is: formulating the sintering system for the ceramic preform according to DSC curve of the ceramic preform material, and when the sintering temperature is less than 500°C, the heating rate is 50°C/h, and when the sintering temperature is greater than 500°C, the heating rate is 250°C/h, and the highest sintering temperature is 1050°C, and keeping warm for 4 hours. After cooling in the furnace, a ceramic preform for a Kelvin structure lattice metal with a high melting point is finally obtained.

Step 203: simulating the process of filling, solidification behavior, casting thermal stress and solidification microstructure of the above-mentioned high melting point Kelvin structure lattice metal by ProCAST software to guide the implementation of the casting process, which takes the 304 stainless steel as its matrix, and preparing the high melting point Kelvin structure lattice metal by vacuum gravity casting, wherein the casting parameters are as follows: the preheating temperature of ceramic preform is 900°C, the alloy casting temperature is 1555°C, the vacuum degree is less than 200Pa.

Step 204: removing the ceramic preform material of the high melting point Kelvin structure lattice metal by using high pressure decore kettle, wherein the chemical corrosion agent is potassium hydroxide, and the removing process parameters are: temperature is set to 400°C, and the pressure of the inner tank is 0.35Mpa and the removing time is 4h, the high melting point Kelvin structure lattice metal is finally obtained, which has a porosity of 88%.

### Example 4

The present embodiment is to design and prepare a Kelvin structure lattice metal, which has a porosity of 88% and takes K418 superalloy as its matrix;
A casting process for the Kelvin structure lattice metal is adaptively designed by using 3D modeling software for casting process, which takes K418 superalloy as its matrix, to design a 3D Kelvin structure lattice metal unit cell 100 taking prisms 101 as its main body, wherein the prism 101 has a diameter of 5mm and a length of 10mm and the ratio of length to diameter is 2. And the size of the outer profile of the design model of the high melting point Kelvin structure lattice metal is 198×113×113mm, and its porosity is 82%.

As shown in Fig.2, the flow chart of a preparing process for a high melting point Kelvin structure lattice metal is illustrated, which uses the indirect 3D printing and investment casting process to prepare the Kelvin structure lattice metal taking K418 superalloy as its matrix, includes the following steps:
Step 201: preparing a precursor of the high melting point Kelvin structure lattice metal by selective laser sintering process, the surface roughness of the processing parameters of 3D model STL file in the selective laser sintering process is 0.1mm, at the same time, the triangle reduction is 0.06mm. The parameters of the selective laser sintering process are: the single layer thickness is 0.2mm, the scanning speed is 4000mm/s, the sintering temperature of the initial layer is 120 °C , the sintering temperature of the general layer is 90°C, the material of the selective laser sintering process is polystyrene.
Step 202: preparing a ceramic preform for the high melting point Kelvin structure lattice metal by using quartz glass as its matrix, and the composition of the ceramic preform is: the ceramic skeleton is quartz glass and its mass fraction is 52.5%; the sintering aids are corundum sand and kaolin soil and their mass fraction are 15% and 2%, respectively; the stabilizer is silica powder and its mass fraction is 1%; the binder is silica sol with a mass fraction of 29.2%; the defoamer is organosilicon with a mass fraction of 0.13%; the surfactant is fatty alcohol polyoxyethylene ether, with a mass fraction of 0.13%.

The forming process of the ceramic preform material is: preparing the raw ceramic preform by the slurry coating process, drying the raw ceramic preform at room temperature for 10h after each slurry coating, and the number of the slurry coating layers is 11 until the whole preform is coated by the ceramic slurry, and then establishing a casting system and carrying out the outer slurry coating process by using the Shangdian soil and Shangdian sand of the traditional investment casting mold material.

The sintering system of the ceramic preform material is: formulating the sintering system for the ceramic preform according to DSC curve of the ceramic preform material, and when the sintering temperature is less than 500°C, the heating rate is 50°C/h, and when the sintering temperature is greater than 500°C, the heating rate is 250°C/h, and the highest sintering temperature is 1030°C, and keeping warm for 4 hours. After cooling in the furnace, a ceramic preform for a Kelvin structure lattice metal with a high melting point is finally obtained.

Step 203: simulating the process of filling, solidification behavior, casting thermal stress and solidification microstructure of the above-mentioned high melting point Kelvin structure lattice metal by ProCAST software to guide the implementation of the casting process, which takes the K418 superalloy as its matrix, and preparing the high melting point Kelvin structure lattice metal by vacuum gravity casting, which takes K418 superalloy as its matrix, wherein the casting parameters are as follows: the preheating temperature of ceramic preform is 930°C, the alloy casting temperature is 1550°C, the vacuum degree is less than 200Pa.

Step 204: removing the ceramic preform material of the high melting point Kelvin structure lattice metal by using high pressure decore kettle, wherein the chemical corrosion agent is potassium hydroxide, and the removing process parameters are: temperature is set to 300°C, and the pressure of the inner tank is 0.25Mpa and the removing time is 4h.

## Claims

1. A high melting point Kelvin structure lattice metal, wherein the lattice metal is a three-dimensional Kelvin structure developed from a base unit cell, wherein the material of the three-dimensional Kelvin structure is high melting point metal material, wherein the high melting point metal material comprises steel material or superalloys material, and the basic unit cell is a Kelvin structure lattice metal unit cell (100) taking a prism (101) structure as its main body, wherein the prism (101) of the Kelvin lattice metal unit cell (100) is a solid body, the rest of the Kelvin lattice metal unit cell (100) is virtual except the prism (101), and two neighboring Kelvin structure lattice metal units cell (100) share a same prism (101), and the Kelvin structure lattice metal has a porosity of 58%-92%, wherein the compression stress-strain curve of the lattice metal has a plastic yield platform and has the same mechanical properties in three spatial directions, wherein the prism (101) has a diameter of 2-10 mm and a length to diameter ratio of 1.2-3.0.

2. A method for preparing a high melting point Kelvin structure lattice metal according to claim 1, comprising the following steps:
Step 1: preparing a precursor for a high melting point Kelvin structure lattice metal by selective laser sintering process, wherein the parameters of the selective laser sintering process in step 1 are as follows: the surface roughness of the processing parameters of 3D model STL file in the selective laser sintering process is 0.04-0.1mm, the triangle reduction is 0.03-0.06mm, and the thickness of single layer of the selective laser sintering process is 0.2mm, the scanning speed is 4000mm/s, the sintering temperature of the initial layer is 110-120°C, the sintering temperature of the rest layer is 90-100°C and the material of the selective laser sintering process is polystyrene;
Step 2: preparing a ceramic preform for the high melting point Kelvin structure lattice metal by using quartz glass as its matrix, and slurry coating and sintering the ceramic preform, wherein the composition of the ceramic preform of the Kelvin structure lattice metal in step 2 is: the ceramic skeleton is quartz glass with a mass fraction of 48-55%, the sintering aids are corundum sand and kaolin soil and their mass fraction are respectively 12-16% and 1-3%; the stabilizer is silicon powder with a mass fraction of 0.5-1.5%, the binder is silica sol with a mass fraction of 29.2-31.9%, the defoamer is organosilicon with a mass fraction of 0.12-0.16%, the surfactant is fatty alcohol polyoxyethylene ether with a mass fraction of 0.13-0.18%;
Step 3: simulating the process of filling, solidification behavior, casting thermal stress and solidification microstructure of the high melting point Kelvin structure lattice metal by ProCAST software to guide the implementation of the casting process, and preparing the high melting point Kelvin structure lattice metal by vacuum gravity casting technology, wherein in step 3, the technological parameters of vacuum gravity casting are: the preheating temperature of the ceramic preform is 900-1000°C, the casting temperature is 50-200°C above the liquidus thereof and the vacuum degree is less than 200Pa;
Step 4: removing the ceramic preform material by using high pressure decore kettle, wherein the chemical corrosive agent in the removing process of the step 4 is potassium hydroxide, and the removing process parameter is: the temperature is 280-400°C, the pressure of the inner tank is 0.15-0.35mpa and the removal time is 4h.

3. The method according to claim 2, wherein in step 2, preparing a raw ceramic preform by the slurry coating process, drying the raw ceramic preform at room temperature for 8-12h after each slurry coating, and the number of the slurry coating layers is 10-12 until the whole preform is coated by the ceramic slurry.

4. The method according to claim 2, wherein in step 2, sintering is carried out according to a DSC (Differential Scanning Calorimetry) curve, and when the sintering temperature is less than 500°C, the heating rate is 50°C/h, and when the sintering temperature is greater than 500°C, the heating rate is 250°C/h, the maximum sintering temperature is 1000-1050°C, and when the sintering temperature is 1000-1050°C, keeping the sintering temperature for 4h.

5. The application of the Kelvin structure lattice metal according to claim 1, wherein the Kelvin structure lattice metal is applied to the lightweight, high temperature resistant components in aerospace, the vibration and noise reduction and buffer energy absorption equipment in ships and the automobile.

## Patentansprüche

1. Kelvinstruktur-Gittermetall mit hohem Schmelzpunkt, wobei das Gittermetall eine aus einer Basis-Einheitszelle entwickelte dreidimensionale Kelvinstruktur ist, wobei das Material der dreidimensionalen Kelvinstruktur Metallmaterial mit hohem Schmelzpunkt ist, wobei das Metallmaterial mit hohem Schmelzpunkt Stahlmaterial oder Superlegierungsmaterial umfasst und die Basis-Einheitszelle eine Kelvinstruktur-Gittermetall-Einheitszelle (100) ist, die eine Prismenstruktur (101) als ihren Hauptkörper annimmt, wobei das Prisma (101) der Kelvin-Gittermetall-Einheitszelle (100) ein Massivkörper ist und der Rest der Kelvin-Gittermetall-Einheitszelle (100) mit der Ausnahme des Prismas (101) virtuell ist und zwei benachbarte Kelvinstruktur-Gittermetall-Einheitszellen (100) ein gemeinsames Prisma (101) teilen und das Kelvinstruktur-Gittermetall eine Porosität von 58%-92% aufweist, wobei die Kompressions-Spannungs-Dehnungs-Kurve des Gittermetalls ein Plateau der plastischen Verformung aufweist und die gleichen mechanischen Eigenschaften in drei Raumrichtungen aufweist, wobei das Prisma (101) einen Durchmesser von 2-10 mm und ein Verhältnis von Länge zu Durchmesser von 1,2-3,0 aufweist.

2. Verfahren zur Herstellung eines Kelvinstruktur-Gittermetalls mit hohem Schmelzpunkt gemäß Anspruch 1, umfassend die folgenden Schritte:
Schritt 1: Herstellen eines Vorläufers für ein Kelvinstruktur-Gittermetall mit hohem Schmelzpunkt durch ein selektives Lasersinterprozess, wobei die Parameter des selektiven Lasersinterprozesses bei Schritt 1 folgendermaßen sind: die Oberflächenrauigkeit der Verarbeitungsparameter der 3D-Modell-STL-Datei bei dem selektiven Lasersinterprozess beträgt 0,04-0,1 mm, die Dreiecksreduktion beträgt 0,03-0,06 mm und die Einzelschichtdicke des selektiven Lasersinterprozesses beträgt 0,2 mm, die Scangeschwindigkeit beträgt 4000 mm/s, die Sintertemperatur der ersten Schicht beträgt 110-120 °C, die Sintertemperatur der Restschicht beträgt 90-100 °C und das Material des selektiven Lasersinterprozesses ist Polystyrol;
Schritt 2: Herstellen einer Keramikvorform für das Kelvinstruktur-Gittermetall mit hohem Schmelzpunkt unter Verwendung von Quarzglas als ihre Matrix und Aufschlämmungsbeschichten und Sintern der Keramikvorform, wobei die Zusammensetzung der Keramikvorform des Kelvinstruktur-Gittermetalls bei Schritt 2 ist: das Keramikskelett ist Quarzglas mit einem Massenanteil von 48-55 %, die Sinterhilfsmittel sind Korundsand und Kaolinerde und ihre Massenanteile sind 12-16 % bzw. 1-3 %; der Stabilisator ist Siliciumpulver mit einem Massenanteil von 0,5-1,5 %, das Bindemittel ist Siliciumdioxid-Sol mit einem Massenanteil von 29,2-31,9 %, der Entschäumer ist Organosilicium mit einem Massenanteil von 0,12-0,16 %, das Tensid ist Fettalkoholpolyoxyethylenether mit einem Massenanteil von 0,13-0,18 %;
Schritt 3: Simulieren des Füllprozesses, des Erstarrungsverhaltens, der Gieß-Wärmespannung und der Erstarrungsmikrostruktur des Kelvinstruktur-Gittermetalls mit hohem Schmelzpunkt durch ProCAST-Software, um die Implementierung des Gießprozesses zu führen, und Herstellen des Kelvinstruktur-Gittermetalls mit hohem Schmelzpunkt durch Unterdruck-Schwerkraftgusstechnologie, wobei bei Schritt 3 die technischen Parameter des Unterdruck-Schwerkraftgießens sind: die Vorheiztemperatur der Keramikvorform beträgt 900-1000 °C, die Gießtemperatur beträgt 50-200 °C über dem Liquidus davon und das Unterdruckniveau liegt unter 200 Pa;
Schritt 4: Entfernen des Keramikvorformmaterials unter Verwendung eines Hochdruckentkernungs-Kessels, wobei das chemische korrosive Mittel bei dem Entfernungsprozesses des Schritts 4 Kaliumhydroxid ist und die Entfernungs-Prozessparameter sind: die Temperatur beträgt 280-400 °C, des Druck des Innentanks beträgt 0,15-0,35 mpa und die Entfernungsdauer beträgt 4 h.

3. Verfahren gemäß Anspruch 2, wobei bei Schritt 2 eine Roh-Keramikvorform durch das Aufschlämmungsbeschichtungsprozess hergestellt wird, die Roh-Keramikvorform nach jedem Aufschlämmungsbeschichten bei Raumtemperatur für 8-12 h getrocknet wird und die Anzahl der Aufschlämmungsbeschichtungsschichten, bis die gesamte Vorform mit der Keramikaufschlämmung beschichtet ist, 10-12 beträgt.

4. Verfahren gemäß Anspruch 2, wobei bei Schritt 2 Sintern gemäß einer DSC (Differentialscanning-Kalorimetrie)-Kurve durchgeführt wird, und wenn die Sintertemperatur niedriger als 500 °C ist, die Heizrate 50 °C/h beträgt, und wenn die Sintertemperatur höher als 500 °C ist, die Heizrate 250 °C/h beträgt, wobei die maximale Sintertemperatur 1000-1050 °C beträgt, und wenn die Sintertemperatur 1000-1050°C beträgt, die Sintertemperatur für 4 h gehalten wird.

5. Anwendung des Kelvinstruktur-Gittermetalls gemäß Anspruch 1, wobei das Kelvinstruktur-Gittermetall für leichte hochtemperaturbeständige Komponenten bei der Raumfahrt, Schwingungs- und Schalldämpfung und Puffer-Energieabsporptionsvorrichtungen in Schiffen und dem Automobil angewendet wird.

## Revendications

1. Treillis métallique à structure de Kelvin à haut point de fusion, le treillis métallique étant une structure de Kelvin tridimensionnelle élaborée à partir d'une cellule unitaire de base, le matériau de la structure de Kelvin tridimensionnelle étant un matériau métallique à haut point de fusion, le matériau métallique à haut point de fusion comprenant un matériau en acier ou un matériau en superalliage, et la cellule unitaire de base étant une cellule unitaire de treillis métallique à structure de Kelvin (100) adoptant une structure de prisme (101) pour son corps principal, le prisme (101) de la cellule unitaire de treillis métallique de Kelvin (100) étant un corps solide, le reste de la cellule unitaire de treillis métallique de Kelvin (100) étant virtuel à l'exception du prisme (101), et deux cellules unitaires de treillis métallique à structure de Kelvin (100) voisines partageant un même prisme (101), et le treillis métallique à structure de Kelvin ayant une porosité de 58 %-92 %, la courbe contrainte-déformation en compression du treillis métallique ayant un plateau de déformation non élastique et ayant les mêmes propriétés mécaniques dans les trois directions de l'espace, le prisme (101) ayant un diamètre de 2-10 mm et un rapport longueur/diamètre de 1,2-3,0.

2. Procédé de préparation d'un treillis métallique à structure de Kelvin à haut point de fusion selon la revendication 1, comprenant les étapes suivantes :
étape 1 : préparation d'un précurseur pour un treillis métallique à structure de Kelvin à haut point de fusion par un processus de frittage sélectif par laser, les paramètres du processus de frittage sélectif par laser à l'étape 1 étant comme suit : la rugosité de surface des paramètres de traitement d'un fichier STL de modèle 3D dans le processus de frittage sélectif par laser est de 0,04-0,1 mm, la réduction triangulaire est de 0,03-0,06 mm, et l'épaisseur de monocouche du processus de frittage sélectif par laser est de 0,2 mm, la vitesse de balayage est de 4000 mm/s, la température de frittage de la couche initiale est de 110-120 °C, la température de frittage de la couche restante est de 90-100 °C et le matériau du processus de frittage sélectif par laser est le polystyrène ;
étape 2 : préparation d'une préforme en céramique pour le treillis métallique à structure de Kelvin à haut point de fusion au moyen de verre de quartz pour sa matrice, et revêtement en suspension et frittage de la préforme en céramique, la composition de la préforme en céramique du treillis métallique à structure de Kelvin à l'étape 2 étant : le squelette en céramique est du verre de quartz avec une fraction massique de 48-55 %, les adjuvants de frittage sont du sable de corindon et du sol de kaolin et leurs fractions massiques sont respectivement de 12-16 % et 1-3 % ; le stabilisant est de la poudre de silicium avec une fraction massique de 0,5-1,5 %, le liant est du sol de silice avec une fraction massique de 29,2-31,9 %, l'agent antimousse est un organosilicium avec une fraction massique de 0,12-0,16 %, le tensioactif est de l'éther de polyoxyéthylène d'alcool gras avec une fraction massique de 0,13-0,18 % ;
étape 3 : simulation du processus de remplissage, du comportement de solidification, des contraintes thermiques de coulée et de la microstructure de solidification du treillis métallique à structure de Kelvin à haut point de fusion par le logiciel ProCAST pour guider la mise en œuvre du processus de coulée, et préparation du treillis métallique à structure de Kelvin à haut point de fusion par une technologie de coulée par gravité sous vide, les paramètres technologiques de la coulée par gravité sous vide à l'étape 3 étant : la température de préchauffage de la préforme en céramique est de 900-1000 °C, la température de coulée est de 50-200 °C au-dessus du liquidus de celle-ci et le degré de vide est de moins de 200 Pa ;
étape 4 : retrait du matériau de préforme en céramique au moyen d'une bouilloire de débourrage à haute pression, l'agent chimique corrosif dans le processus de retrait de l'étape 4 étant l'hydroxyde de potassium, et les paramètres du processus de retrait étant : la température est de 280-400 °C, la pression de la cuve interne est de 0,15-0,35 MPa et le temps de retrait est de 4 h.

3. Procédé selon la revendication 2 dans lequel, à l'étape 2, la préparation d'une préforme en céramique brute par le processus de revêtement en suspension, le séchage de la préforme en céramique brute à température ambiante pendant 8-12 h après chaque revêtement en suspension, et le nombre des couches de revêtement en suspension est de 10-12 jusqu'à ce que la préforme entière soit revêtue par la suspension de céramique.

4. Procédé selon la revendication 2 dans lequel, à l'étape 2, le frittage est réalisé selon une courbe de DSC (calorimétrie différentielle à balayage), et quand la température de frittage est inférieure à 500 °C, la vitesse de chauffage est de 50 °C/h, et quand la température de frittage est supérieure à 500 °C, la vitesse de chauffage est de 250 °C/h, la température maximale de frittage est de 1000-1050 °C, et quand la température de frittage est de 1000-1050 °C, le maintien de la température de frittage pendant 4 h.

5. Application du treillis métallique à structures de Kelvin selon la revendication 1, dans laquelle le treillis métallique à structure de Kelvin est appliqué aux composants légers, résistants à haute température pour l'aérospatiale, les équipements de réduction des vibrations et du bruit et d'absorption d'énergie tampon dans les navires et l'automobile.
